# EUROPÄISCHE PATENTANMELDUNG

(11) **EP 3 459 656 A1**
(43) Veröffentlichungstag der Anmeldung: **27.03.2019**
(21) Anmeldenummer: 18195228.4
(22) Anmeldetag: 18.09.2018
(51) Int. Cl.: B22F 3/105, B22F 3/24, B33Y 10/00, B33Y 30/00, B29C 64/153

(54) **VERFAHREN UND VORRICHTUNG ZUR ADDITIVEN HERSTELLUNG EINES BAUTEILS**

(30) Priorität: 21.09.2017 DE 102017216704
(71) Anmelder: Siemens Aktiengesellschaft, 80333 München (DE)
(72) Erfinder: Haje, Detlef, 02828 Görlitz (DE)

(57) **Zusammenfassung**

Die Erfindung betrifft ein Verfahren zur additiven Herstellung eines Bauteils (1) auf einem Arbeitsraumboden (2), aufweisend die folgenden sich abwechselnden Verfahrensschritte zum schichtweisen Erzeugen des Bauteils (1): Bereitstellen einer Materialschicht (3) aus mindestens einem Bauteilmaterial (4) und gezieltes Aufschmelzen der bereitgestellten Materialschicht (3). Zusätzlich zu einem gezielten Aufschmelzen mindestens wird eine erste Temperierungsmaßnahme im Arbeitsraum (5) derart durchgeführt, dass ein Temperaturgradient mindestens einer ersten Bauteilstelle (8) des Bauteils (1) in mindestens einer ersten Bauteilschicht (9) des Bauteils (1) gezielt beeinflusst wird. Ferner betrifft die Erfindung eine Vorrichtung (13) zur additiven Herstellung eines Bauteils (1) .

## Beschreibung

Die vorliegende Erfindung betrifft ein Verfahren zur additiven Herstellung eines Bauteils. Ferner betrifft die vorliegende Erfindung eine Vorrichtung zur additiven Herstellung eines Bauteils, welche zur Durchführung des Verfahrens ausgebildet ist.

Derzeit gewinnen additive Herstellverfahren, wie etwa 3D-Druckverfahren, zunehmend an Bedeutung, da sie signifikante Vorteile in Formgebungsfreiheit, Endkonturnähe, Flexibilität und Schnelligkeit gegenüber konventionellen Herstellungsverfahren besitzen, welche oftmals Arbeitsvorgänge wie Sägen, Fräsen, Drehen, Schweißen, Kleben, Schrauben oder dergleichen umfassen.

Ein bekanntes additives Herstellungsverfahren ist das selektive Laserschmelzen bzw. Selective Laser Melting, welches auch als SLM-Verfahren bezeichnet wird. Beim SLM-Verfahren, sowie bei einigen anderen additiven Herstellungsverfahren, wird zunächst eine Materialschicht aus einem Bauteilmaterial auf einem Arbeitsraumboden bereitgestellt, insbesondere als Materialschicht mit einer konstanten Schichtdicke. Das Bauteilmaterial weist beispielsweise eine Pulver- oder Granulatform auf und wird, insbesondere mittels Rakeln, auf dem Arbeitsraumboden gleichmäßig verteilt. Anschließend wird das Bauteilmaterial mittels einer Aufschmelzvorrichtung gezielt bzw. selektiv lokal aufgeschmolzen oder zumindest gezielt bzw. selektiv lokal gesintert. Durch die gezielte Aufschmelzung bzw. das gezielte Sintern wird eine zusammenhängende Struktur einer Bauteilschicht des Bauteils geschaffen. Durch Wiederholen dieser Verfahrensschritte wird das Bauteil schichtweise erzeugt, wobei die einzelnen Bauteilschichten miteinander verbunden sind. Das überschüssige Bauteilmaterial kann leicht entfernt und recycelt werden, da dieses nicht aufgeschmolzen bzw. gesintert wurde und somit weiterhin in Pulver- bzw. Granulatform vorliegt.

Das gezielte Aufschmelzen bzw. gezielte Sintern stellt ein zentrales Merkmal vieler additiver Verfahren dar. Auf der anderen Seite besitzt die lokale Aufschmelzung auch werkstoffkundliche bzw. metallographische Nachteile. Insbesondere entspricht das erzeugte Bauteilgefüge im Wesentlichen einem Schweißgefüge, welches mit einer hohen Abkühlrate erzeugt wurde, da jeweils nur kleine Bereiche aufgeschmolzen werden und die aufgeschmolzenen Bereiche über das benachbarte kühlere Bauteilmaterial besonders schnell abgekühlt werden. Hohe Abkühlungsraten bzw. derartige Bauteilgefüge stellen insbesondere für warmfeste oder warmriss-empfindliche Werkstoffe einen Nachteil dar, da die erzeugten Bauteile oftmals eine erhöhte Sprödigkeit aufweisen und eine nachteilige Rissbildung, durch welche insbesondere eine mechanische Belastbarkeit des Bauteils erheblich reduzierbar ist, besonders begünstigen. Weiterhin werden durch den schnellen Abkühlprozess nur bestimmte metallische Gefüge erzeugt, die nachteilig hinsichtlich ihrer mechanischen Eigenschaften sein können, beispielsweise eine unzureichende Duktilität aufweisen. Ferner sind Bauteilwerkstoffe bekannt, welche nach dem Schweißen eine weitere Wärmebehandlung, wie z.B. Glühen, insbesondere ein Anlass- oder Weichglühen, oder eine bestimmte Temperaturführung erfordern, um ein vorgegebenes Bauteilgefüge zu erreichen und somit geforderte Werkstoffeigenschaften aufweisen. Derartige Nachbehandlungen verursachen hohe zusätzliche Kosten aufgrund eines hohen Energieverbrauchs, der Bereitstellung zusätzlicher Bearbeitungsvorrichtungen sowie eines zusätzlichen Handhabungsaufwands.

Es ist daher die Aufgabe der vorliegenden Erfindung, ein Verfahren sowie eine Vorrichtung zur additiven Herstellung eines Bauteils zu schaffen, die die Nachteile des Stands der Technik beheben oder zumindest teilweise beheben. Es ist insbesondere die Aufgabe der vorliegenden Erfindung, ein Verfahren sowie eine Vorrichtung zur additiven Herstellung eines Bauteils bereitzustellen, die mit einfachen Mitteln sowie kostengünstig die Herstellung eines Bauteils mit einem verbesserten Bauteilgefüge gewährleisten.

Die voranstehende Aufgabe wird durch die Patentansprüche gelöst. Demnach wird die Aufgabe durch ein Verfahren zur additiven Herstellung eines Bauteils gemäß dem unabhängigen Anspruch 1 gelöst. Ferner wird die voranstehende Aufgabe durch eine Vorrichtung zur additiven Herstellung eines Bauteils gemäß dem unabhängigen Anspruch 9 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren zur additiven Herstellung eines Bauteils beschrieben sind, selbstverständlich auch im Zusammenhang mit der erfindungsgemäßen Vorrichtung zur additiven Herstellung eines Bauteils und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zur additiven Herstellung eines Bauteils auf einem Arbeitsraumboden gelöst. Das Verfahren weist die folgenden sich abwechselnden Verfahrensschritte auf:
- Bereitstellen einer Materialschicht aus mindestens einem Bauteilmaterial in einem sich oberhalb des Arbeitsraumbodens erstreckenden Arbeitsraum mittels einer Schichtauftragsvorrichtung, und
- gezieltes Aufschmelzen der bereitgestellten Materialschicht mittels einer Aufschmelzvorrichtung zum Generieren einer Bauteilschicht des Bauteils im Arbeitsraum.
Erfindungsgemäß wird zusätzlich zum gezielten Aufschmelzen mindestens eine erste Temperierungsmaßnahme im Arbeitsraum derart durchgeführt, dass ein Temperaturgradient mindestens einer ersten Bauteilstelle des Bauteils in mindestens einer ersten Bauteilschicht des Bauteils gezielt beeinflusst wird.

Der Arbeitsraumboden ist die Basis für das additive Herstellen des Bauteils. Der Arbeitsraumboden ist derart ausgebildet, dass das Bauteilmaterial auf diesem bereitstellbar und zu einer Materialschicht, insbesondere einer Materialschicht mit einer konstanten bzw. im Wesentlichen konstanten Materialschichtdicke, verteilbar ist.

Das Bereitstellen der Materialschicht erfolgt mittels der Schichtauftragsvorrichtung, wobei die Materialschicht vorzugsweise als Materialschicht mit konstanter bzw. im Wesentlichen konstanter Schichtdicke bereitgestellt wird. Das Bereitstellen der Materialschicht kann beispielsweise durch gezieltes Ablegen und/oder Rakeln mittels der Schichtauftragsvorrichtung erfolgen. Erfindungsgemäß kann vorgesehen sein, dass mehrere Bauteilmaterialien für eine Bauteilschicht oder unterschiedliche Bauteilschichten verwendet werden. Bei unterschiedlichen Bauteilmaterialien ist es bevorzugt, dass die unterschiedlichen Bauteilmaterialien denselben oder zumindest einen ähnlichen Schmelzpunkt aufweisen, um eine gute Anbindung der verschiedenen Bauteilmaterialien durch das gezielte Aufschmelzen zu gewährleisten. Unterschiedliche Bauteilmaterialien sind insbesondere dann vorteilhaft, wenn ein Bauteil zu erzeugen ist, welches unterschiedliche Bauteileigenschaften aufweist, wobei diese unterschiedlichen Bauteileigenschaften auch durch eine gezielte Prozessführung, wie z.B. Temperaturführung, Atmosphärenbeeinflussung oder dergleichen, nicht oder nur sehr aufwendig erzielbar sind. Das Bereitstellen der Materialschicht mit unterschiedlichen Bauteilmaterialien kann beispielsweise mittels einer entsprechenden Pulvermischung oder durch Auftrag, insbesondere gezielten Auftrag, mehrerer Pulver unterschiedlicher Bauteilmaterialien erfolgen. Es kann auch vorgesehen sein, dass das Bauteilmaterial beim Bereitstellen an einem bestehenden Objekt angeordnet wird, um beim gezielten Aufschmelzen mit diesem Objekt eine stoffschlüssige Verbindung einzugehen oder das Objekt in das Bauteilmaterial einzubetten und somit formschlüssig an diesem zu halten.

Beim gezielten Aufschmelzen wird Energie gezielt in mindestens einen vorgegebenen Bereich der Materialschicht eingebracht, um diesen Bereich aufzuschmelzen oder zumindest zu sintern. Vorzugsweise werden mehrere Bereiche aufgeschmolzen, die miteinander verbunden oder voneinander getrennt sein können. Das Einbringen der Energie kann beispielsweise mittels eines Laserstrahls und/oder eines Elektronenstrahls oder dergleichen erfolgen. Hierdurch bildet das Bauteilmaterial eines aufgeschmolzenen Bereichs durch ein Zusammenbinden der einzelnen Granulat- bzw. Pulverbestandteile des Bauteilmaterials eine stoffschlüssige Materialeinheit. Nach dem anschließenden Erstarren des aufgeschmolzenen Bauteilmaterials weist die Materialeinheit eine Formstabilität auf. Auf diese Weise ist eine Bauteilmaterialschicht erzeugt worden.

Nach dem Erzeugen einer Bauteilmaterialschicht wird der Arbeitsraumboden vorzugsweise um eine Schichtdicke der erzeugten Bauteilmaterialschicht abgesenkt, um das Bereitstellen sowie gezielte Aufschmelzen einer folgenden Materialschicht zu begünstigen. Durch Bereitstellen einer weiteren Materialschicht und gezieltem Aufschmelzen der weiteren Materialschicht kann eine weitere Bauteilschicht erzeugt werden, welche mit der vorherigen Bauteilschicht stoffschlüssig verbunden ist. Diese Vorgänge werden vorzugsweise solange abwechselnd wiederholt, bis das Bauteil Bauteilschicht für Bauteilschicht fertiggestellt ist.

Die mindestens eine erste Temperierungsmaßnahme wird zusätzlich zum gezielten Aufschmelzen bzw. Sintern im Arbeitsraum sowie an der mindestens einen ersten Bauteilstelle durchgeführt. Es kann erfindungsgemäß vorgesehen sein, dass die mindestens eine erste Temperierungsmaßnahme auf mehrere erste Bauteilstellen oder das komplette Bauteil gerichtet wird. Ferner kann die mindestens eine erste Temperierungsmaßnahme derart durchgeführt werden, dass unterschiedliche erste Bauteilstellen bzw. das komplette Bauteil unterschiedlich beeinflusst werden. Die erste Temperierungsmaßnahme kann beispielsweise während oder nach dem gezielten Aufschmelzen der bereitgestellten Materialschicht bzw. der Erzeugung einer Bauteilschicht erfolgen. Es kann erfindungsgemäß vorgesehen sein, dass die erste Temperierungsmaßnahme derart durchgeführt wird, dass hierdurch mehrere Bauteilschichten beeinflusst werden. Vorzugsweise wird die erste Temperierungsmaßnahme an Bauteilstellen durchgeführt, an welchen das Bauteil hohe Kerbwirkungen bzw. eine konstruktiv bedinge ungünstige Spannungsverteilung aufweist, um die mechanischen Eigenschaften des Bauteils an diesen besonders gefährdeten Bauteilstellen zu verbessern.

Die erste Temperierungsmaßnahme wird vorzugsweise derart durchgeführt, dass Bauteileigenschaften der mindestens einen ersten Bauteilstelle des Bauteils gezielt modifiziert werden. Die Bauteileigenschaften betreffen beispielsweise die Mikrostruktur, das Gefüge, die Kristallstruktur, den Eigenspannungs- oder Verformungszustand, Kristallwachstum oder dergleichen. Durch die erste Temperierungsmaßnahme können im Rahmen der erfindungsgemäßen Verfahrens stark lokalisierte oder großflächigere Bereiche des Bauteils beispielsweise moderat oder stark erwärmt oder auch moderat oder stark abgekühlt werden. Somit kann der Temperaturgradient an der mindestens einen ersten Bauteilstelle des Bauteils verkleinert oder vergrößert werden. Es kann ebenfalls vorgesehen sein, dass stark lokalisierte oder großflächigere Bereiche des Bauteils durch die erste Temperierungsmaßnahme über einen vorgegebenen Zeitraum auf einer Temperatur gehalten werden und der Temperaturgradient für diesen Zeitraum somit auf "null" verändert wird.

In dem Fall, dass das Bauteil oder zumindest Bereiche des Bauteils mehrere unterschiedliche Bauteilmaterialien aufweisen, können mittels der ersten Temperierungsmaßnahme auch die Eigenschaften der Verbindung der unterschiedlichen Bauteilmaterialien gezielt beeinflusst werden, beispielsweise Diffusionstiefe, Kristallwachstum, Gefügeverbund oder dergleichen. Ein erfindungsgemäßes Verfahren hat gegenüber herkömmlichen Verfahren zur additiven Herstellung eines Bauteils den Vorteil, dass mit einfachen Mitteln sowie kostengünstig ein Bauteil additiv herstellbar ist, welches zumindest bereichsweise verbesserte Bauteileigenschaften aufweist. Somit ist beispielsweise die Zugfestigkeit und/oder Druckfestigkeit und/oder Kerbschlagzähigkeit des additiv hergestellten Bauteils verbesserbar.

Gemäß einer bevorzugten Weiterbildung der Erfindung kann bei einem Verfahren vorgesehen sein, dass als mindestens eine erste Temperierungsmaßnahme ein gezieltes lokales Wärmeeinbringen oder ein gezieltes lokales Wärmeabführen an der mindestens einen ersten Bauteilstelle durchgeführt wird. Durch ein Wärmeeinbringen kann beispielsweise ein Lösungsglühen, Diffusionsglühen, Anlassen oder dergleichen bewirkt werden. Es kann erfindungsgemäß auch ein erneutes Aufschmelzen der mindestens einen ersten Bauteilstelle erzielt werden. Vorzugsweise werden bei der mindestens einen ersten Temperierungsmaßnahme Intensität und/oder Einwirkungsdauer gezielt gesteuert, um somit beispielsweise die Eindringtiefe einer Erwärmung zu beeinflussen. Durch ein gezieltes lokales Wärmeabführen können beispielsweise eine Vergütung oder ein Abschreckvorgang erzielt werden. Ein lokales Wärmeabführen ist beispielsweise durch lokales Einströmen eines Kühlgases oder eines prozessverträglichen Kühlmediums, wie etwa Eindüsen eines verdampfbaren Wassernebels, abseits des Aufschmelzbereiches, realisierbar.

Weiter bevorzugt wird die mindestens eine erste Temperierungsmaßnahme derart durchgeführt, dass ein Temperaturgradient mindestens einer zweiten Bauteilstelle einer Bauteilschicht anders als der Temperaturgradient der mindestens einen ersten Bauteilstelle beeinflusst wird. Unter einer anderen Beeinflussung wird im Rahmen der Erfindung keine Beeinflussung, eine indirekte Beeinflussung über Wärmeleitung des Bauteils oder eine direkte Beeinflussung, welche gezielt anders als die direkte Beeinflussung der ersten Bauteilstelle ausgebildet ist, verstanden. Dies hat den Vorteil, dass die additive Erzeugung eines Bauteils, welches Bauteilbereiche mit gezielt unterschiedlichen Werkstoffeigenschaften aufweist, verbessert ist.

Vorzugsweise wird mindestens eine zweite Temperierungsmaßnahme im Arbeitsraum derart durchgeführt, dass der Arbeitsraum gleichmäßig oder im Wesentlichen gleichmäßig temperiert wird. Hierdurch kann beispielsweise der gesamte Arbeitsraum oder nur ein Abschnitt des Arbeitsraums beeinflusst werden. Bei der mindestens einen zweiten Temperierungsmaßnahme wird vorzugsweise Wärme in den Arbeitsraum eingebracht. Die Wärme wird beispielsweise mittels einer Heizvorrichtung erzeugt. Die Wärmeeinbringung erfolgt vorzugsweise zum Erhöhen oder Halten einer Bauteiltemperatur. Es kann erfindungsgemäß vorgesehen sein, dass durch die Wärmeeinbringung eine Abkühlgeschwindigkeit des Bauteils reduziert wird. Auf diese Weise sind kurz- oder mittelfristige Wärmebehandlungen oder eine Begleitheizung des Aufschmelzvorganges möglich, wie sie zum Beispiel für Warmriss-gefährdete Werkstoffe vorteilhat ist. Auch sind auf diese Weise abkühlungsbedingte Eigenspannungen reduzierbar.

Ferner ist es bevorzugt, dass mittels einer Temperaturerfassungsvorrichtung die Temperatur und/oder der Temperaturgradient der mindestens einen ersten Bauteilstelle ermittelt wird, wobei die mindestens eine erste Temperierungsmaßnahme in Abhängigkeit der ermittelten Temperatur und/oder des ermittelten Temperaturgradienten der mindestens einen ersten Bauteilstelle gesteuert wird. Die Temperaturerfassungsvorrichtung ist vorzugsweise als Infrarotthermometer oder -kamera ausgebildet. Vorzugsweise ist die Temperaturerfassungsvorrichtung auch ausgebildet, eine Innentemperatur des Arbeitsraums zu ermitteln. Eine solche Überwachung der Temperatur bzw. des Temperaturgradienten hat den Vorteil, dass die Prozessführung des erfindungsgemäßen Verfahrens, insbesondere das Aufschmelzen und die mindestens eine erste Temperierungsmaßnahme, präziser durchführbar ist. Auf diese Weise sind die Bauteileigenschaften des Bauteils mit einfachen Mitteln sowie kostengünstig verbesserbar.

Es kann erfindungsgemäß vorgesehen sein, dass mittels der Temperaturerfassungsvorrichtung eine Temperaturverteilung der mindestens einen ersten Bauteilschicht ermittelt wird. Auf diese Weise ist die gezielte Steuerung des Aufschmelzens sowie der ersten Temperierungsmaßnahme bzw. der zweiten Temperierungsmaßnahme bedarfsgerecht durchführbar und somit verbesserbar, da hierdurch eine übermäßige thermische Beeinflussung des Bauteils vermeidbar oder zumindest reduzierbar ist.

Es ist bevorzugt, dass die mindestens eine zweite Temperierungsmaßnahme in Abhängigkeit des ermittelten Temperaturgradienten der mindestens einen ersten Bauteilstelle gesteuert wird. In diesem Rahmen wird vorzugsweise die Steuerung der ersten Temperierungsmaßnahme berücksichtigt. Auf diese Weise sind die Temperaturgradienten der übrigen Bauteilstellen des Bauteils über eine verbesserte Steuerung der zweiten Temperierungsmaßnahme gezielt beeinflussbar und auf den Temperaturgradienten der ersten Bauteilstelle abstimmbar. Hierdurch können beispielsweise sprunghafte Bauteilgefügeveränderungen im Bauteil vermieden oder zumindest erheblich reduziert werden. Somit sind Bauteileigenschaften des Bauteils weiter verbesserbar.

In einer vorteilhaften Ausgestaltung der Erfindung wird der Arbeitsraum zur Beeinflussung des Generierens mindestens einer Bauteilschicht mittels einer Atmosphärensteuerungsvorrichtung mit einem Schutzgas beaufschlagt und/oder mit einem Aktivgas beaufschlagt und/oder vollständig oder teilweise evakuiert. Mittels eines Schutzgases ist eine sichere Prozessführung erreichbar, sodass unerwünschte chemische Einwirkungen auf den Bauteilwerkstoff beim Aufschmelzen vermeidbar sind. Mittels eines Aktivgases kann eine gezielte Reaktion mit dem Bauteilwerkstoff, insbesondere mit dem sich im aufgeschmolzenen Zustand befindlichen Bauteilwerkstoff, bewirkt werden. Auf diese Weise ist beispielsweise eine Oxidation des Bauteilwerkstoffs hervorrufbar, mittels welcher eine Verunreinigung des Bauteilwerkstoffs beseitigbar ist. Unter einem Vakuum ist ein Zutritt von Gasen zum aufgeschmolzenen Bauteilwerkstoff ausgeschlossen oder zumindest stark eingeschränkt. Auf diese Weise können in der Schmelze gelöste Gasbestandteile austreten und abgeführt werden. Die Abfuhr dieser Gasbestandteile erfolgt vorzugsweise mittels der Atmosphärensteuerungsvorrichtung. Somit ist eine Veredelung des Bauteils durch Reduzierung von Verunreinigungen mit einfachen Mitteln sowie auf eine kostengünstige Art und Weise erzielbar.

Gemäß einem zweiten Aspekt der Erfindung wird die Aufgabe erfindungsgemäß durch eine Vorrichtung zur additiven Herstellung eines Bauteils gelöst. Die Vorrichtung weist einen Arbeitsraum, welcher nach unten durch einen Arbeitsraumboden begrenzt ist, eine Schichtauftragsvorrichtung zum Bereitstellen einer Materialschicht aus mindestens einem Bauteilmaterial in dem Arbeitsraum und eine Aufschmelzvorrichtung zum gezielten Aufschmelzen der bereitgestellten Materialschicht zum Generieren einer Bauteilschicht des Bauteils im Arbeitsraum auf. Erfindungsgemäß ist die Vorrichtung zur Ausführung des erfindungsgemäßen Verfahrens ausgebildet.

Der Arbeitsraum ist vorzugsweise durch eine Arbeitsraumwand der Vorrichtung seitlich begrenzt. Der Arbeitsraumboden ist vorzugsweise von der Arbeitsraumwand seitlich umgeben und vorzugsweise zur Arbeitsraumwand abgedichtet, z.B. durch eine Dichtleiste, insbesondere aus Metall, Hartkunststoff, Silikon, Gummi oder dergleichen. Der Arbeitsraumboden ist vorzugsweise relativ zur Arbeitsraumwand vertikal bewegbar, sodass die Erzeugung der Bauteilschichten stets auf derselben Höhe erfolgen kann. Weiter bevorzugt weist die Vorrichtung eine Arbeitsraumdecke auf, an welcher Komponenten der Vorrichtung anordenbar sind. Es ist weiter bevorzugt, dass der Arbeitsraum mittels des Arbeitsraumbodens, der Arbeitsraumwand und der Arbeitsraumdecke luftdicht bzw. zumindest im Wesentlichen luftdicht verschließbar ist. Vorzugsweise weisen der Arbeitsraumboden und/oder die Arbeitsraumwand und/oder die Arbeitsraumdecke eine Heizvorrichtung und/oder eine Kühlvorrichtung zur Steuerung einer Innentemperatur im Arbeitsraum auf.

Die Schichtauftragungsvorrichtung ist ausgebildet, das vorzugsweise pulver- bzw. granulatförmige Bauteilmaterial auf dem Arbeitsraumboden bzw. auf einer bereits zuvor generierten Bauteilschicht zu der Materialschicht anzuordnen. Hierfür kann die Schichtauftragungsvorrichtung beispielsweise eine Schüttvorrichtung zum Schütten des Bauteilmaterials sowie eine Rakelvorrichtung zum gleichmäßigen Verteilen des Bauteilmaterials durch Rakeln aufweisen. Ferner kann die Schichtauftragungsvorrichtung erfindungsgemäß eine Heizvorrichtung aufweisen, um das Bauteilmaterial zu erwärmen, um eine Verarbeitbarkeit, insbesondere eine Aufschmelzbarkeit bzw. Sinterbarkeit, des Bauteilmaterials zu verbessern.

Die Aufschmelzvorrichtung ist zum gezielten Aufschmelzen der Materialschicht zum Generieren der Bauteilschicht des Bauteils ausgebildet. Somit sind vordefinierte aufgeschmolzene Konturen in der Bauteilschicht mittels der Aufschmelzvorrichtung erzeugbar. Vorzugsweise weist die Aufschmelzvorrichtung zum Aufschmelzen der Materialschicht einen Laser und/oder eine Elektronenstrahlvorrichtung oder dergleichen auf. Es ist bevorzugt, dass die Aufschmelzvorrichtung zur Durchführung der ersten Temperierungsmaßnahme ausgebildet ist.

Vorzugsweise weist die Vorrichtung eine Steuerungsvorrichtung auf, welche zum Steuern des Arbeitsraumbodens, der Schichtauftragsvorrichtung sowie der Aufschmelzvorrichtung ausgebildet ist. Mittels der Steuerungsvorrichtung ist die erste Temperierungsmaßnahme steuerbar. Weiter bevorzugt ist die Steuerungsvorrichtung zur Steuerung mindestens einer Heizvorrichtung und/oder mindestens einer Kühlvorrichtung der Vorrichtung ausgebildet. Erfindungsgemäß ist die Vorrichtung ausgebildet, das erfindungsgemäße Verfahren auszuführen.

Die erfindungsgemäße Vorrichtung weist dieselben Vorteile auf, welche bereits zu dem Verfahren zur additiven Herstellung eines Bauteils gemäß dem ersten Aspekt der Erfindung beschrieben sind. Demnach hat die erfindungsgemäße Vorrichtung zur additiven Herstellung eines Bauteils gegenüber herkömmlichen Vorrichtungen den Vorteil, dass mit einfachen Mitteln sowie kostengünstig ein Bauteil additiv herstellbar ist, welches zumindest bereichsweise verbesserte Bauteileigenschaften aufweist. Somit ist beispielsweise die Zugfestigkeit und/oder Druckfestigkeit und/oder Kerbschlagzähigkeit des additiv hergestellten Bauteils verbesserbar.

Es ist bevorzugt, dass die Vorrichtung eine erste Temperierungsvorrichtung aufweist, welche zur Durchführung der mindestens einen ersten Temperierungsmaßnahme ausgebildet ist. Die erste Temperierungsvorrichtung ist in diesem Fall eine von der Aufschmelzvorrichtung verschiedene Vorrichtung. Vorzugsweise ist die erste Temperierungsvorrichtung zum Erwärmen und/oder Sintern und/oder Aufschmelzen und/oder Kühlen des Bauteilmaterials ausgebildet. Vorzugsweise ist die Steuerungsvorrichtung zum Steuern der ersten Temperierungsvorrichtung ausgebildet. Die erste Temperierungsvorrichtung weist vorzugsweise einen Laser und/oder eine Elektronenstrahlvorrichtung und/oder eine Kühlvorrichtung auf. Eine erste Temperierungsvorrichtung hat den Vorteil, dass die Temperatur bzw. ein Temperaturgradient definierter Bereiche des Bauteils bzw. mindestens einer Bauteilschicht gezielt beeinflussbar sind.

Vorzugsweise weist die Vorrichtung mindestens eine zweite Temperierungsvorrichtung auf, welche als Heizvorrichtung und/oder Kühlvorrichtung ausgebildet ist. Die zweite Temperierungsvorrichtung ist vorzugsweise in den Arbeitsraumboden und/oder die Arbeitsraumwand und/oder die Arbeitsraumdecke integriert bzw. zumindest zum direkten Temperieren des Arbeitsraumbodens und/oder der Arbeitsraumwand und/oder der Arbeitsraumdecke ausgebildet. Vorzugsweise ist die Steuerungsvorrichtung zum Steuern der zweiten Temperierungsvorrichtung ausgebildet. Es kann erfindungsgemäß vorgesehen sein, dass die zweite Temperierungsvorrichtung mit einer Atmosphärensteuerungsvorrichtung gekoppelt und zum direkten Erwärmen bzw. Kühlen eines mittels der Atmosphärensteuerungsvorrichtung bewirkten Gasstroms ausgebildet ist. Die zweite Temperierungsvorrichtung ist vorzugsweise ausgebildet, die zweite Temperierungsmaßnahme durchzuführen. Eine zweite Temperierungsvorrichtung hat den Vorteil, dass mit einfachen Mitteln eine Temperatur im Arbeitsraum steuerbar ist. Somit sind beispielsweise Abkühlungsraten des Bauteils reduzierbar, um ein Kristallwachstum zu verlängern und somit eine Duktilität des Bauteils zu erhöhen. Alternativ sind hiermit Abkühlungsraten des Bauteils erhöhbar, um das Kristallwachstum zu verkürzen und somit eine Festigkeit des Bauteils zu erhöhen.

Weiter bevorzugt weist die Vorrichtung mindestens eine Temperaturerfassungsvorrichtung zum Ermitteln der Temperatur und/oder des Temperaturgradienten der mindestens einen ersten Bauteilstelle auf. Die Temperaturerfassungsvorrichtung ist vorzugsweise ausgebildet, eine Temperaturverteilung auf einer Bauteilschicht bzw. einer Bauteiloberfläche zu erfassen. Somit ist eine Prozesssteuerung des additiven Fertigungsverfahrens, insbesondere beim Aufschmelzen sowie der ersten Temperierungsmaßnahme bzw. der zweiten Temperierungsmaßnahme, mit einfachen Mitteln sowie kostengünstig verbesserbar.

Es ist erfindungsgemäß bevorzugt, dass die Vorrichtung mindestens eine Atmosphärensteuerungsvorrichtung aufweist, welche zum Beaufschlagen des Arbeitsraums mit einem Schutzgas und/oder mit einem Aktivgas und/oder zum vollständigen oder teilweisen Evakuieren des Arbeitsraums ausgebildet ist. Eine Schnittstelle der Atmosphärensteuerungsvorrichtung und dem Arbeitsraum zum Durchleiten von Gas ist vorzugsweise in der Arbeitsraumdecke und/oder einem oberen Bereich der Arbeitsraumwand ausgebildet. Vorzugsweise weist die Atmosphärensteuerungsvorrichtung mindestens eine Düse zum gezielten Beeinflussen der Atmosphäre an einer Bauteilstelle einer oberen Bauteilschicht auf. Die Atmosphärensteuerungsvorrichtung ist vorzugsweise mittels der Steuerungsvorrichtung steuerbar. Durch die Atmosphärensteuerungsvorrichtung ist eine Atomsphäre im Arbeitsraum gezielt steuerbar bzw. erzeugbar. Hierdurch können Bauteileigenschaften des Bauteils verbessert werden.

Ein erfindungsgemäßes Verfahren und eine erfindungsgemäße Vorrichtung zur additiven Herstellung eines Bauteils werden nachfolgend anhand von Zeichnungen näher erläutert. Es zeigen jeweils schematisch:
- Figur 1: in einer Schnittdarstellung eine bevorzugte Ausführungsform einer erfindungsgemäßen Vorrichtung,
- Figur 2: in einer Seitenansicht einen ersten Verfahrensschritt einer bevorzugten Ausführungsform des erfindungsgemäßen Verfahrens,
- Figur 3: in einer Seitenansicht einen zweiten Verfahrensschritt einer bevorzugten Ausführungsform des erfindungsgemäßen Verfahrens,
- Figur 4: in einer Seitenansicht einen dritten Verfahrensschritt einer bevorzugten Ausführungsform des erfindungsgemäßen Verfahrens, und
- Figur 5: in einem Diagramm einen exemplarischen Temperaturverlauf einer ersten Bauteilstelle bei der Ausführung des erfindungsgemäßen Verfahrens.

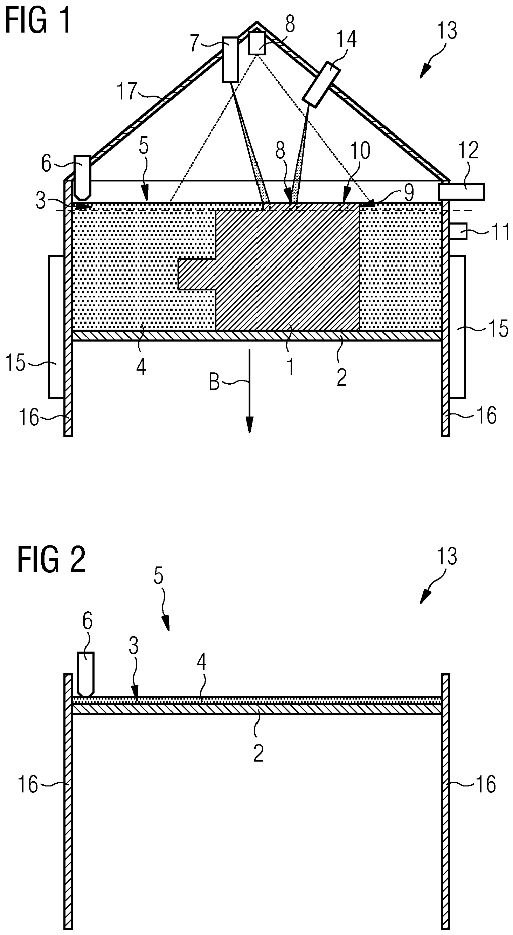

In Fig. 1 ist eine bevorzugte Ausführungsform einer erfindungsgemäßen Vorrichtung 13 schematisch in einer Schnittdarstellung abgebildet. Die Vorrichtung 13 weist einen Arbeitsraum 5 auf, welcher nach unten durch einen Arbeitsraumboden 2, seitlich durch Arbeitsraumwände 16 und nach oben durch eine Arbeitsraumdecke 17 begrenzt ist. Der Arbeitsraumboden 2 ist relativ zu den Arbeitsraumwänden 16 in die Bewegungsrichtung B sowie entgegen der Bewegungsrichtung B bewegbar. Auf dem Arbeitsraumboden 2 ist ein Bauteil 1 bereits teilweise erzeugt. Das Bauteil 1 ist von granulat- oder pulverförmigem Bauteilmaterial 4 umgeben.

Die Vorrichtung 13 weist eine Schichtauftragungsvorrichtung 6 auf mittels welcher das Bauteilmaterial 4 schichtweise in den Arbeitsraum 5 einbringbar ist. Eine an der Arbeitsraumdecke 17 angeordnete Aufschmelzvorrichtung 7 der Vorrichtung 13 ist ausgebildet, das Bauteilmaterial 4 einer oberen Materialschicht 3 zur Generierung einer ersten Bauteilschicht 9 gezielt aufzuschmelzen bzw. zu sintern. Die Vorrichtung 13 weist eine erste Temperierungsvorrichtung 14 auf, welche an der Arbeitsraumdecke 17 angeordnet ist. Mittels der ersten Temperierungsvorrichtung 14 ist eine Temperatur bzw. ein Temperaturgradient einer beliebigen ersten Bauteilstelle 8 der ersten Bauteilschicht 9 durch eine erste Temperierungsmaßnahme gezielt beeinflussbar, z.B. durch Erwärmen oder Abkühlen. In diesem Ausführungsbeispiel ist die erste Temperierungsvorrichtung 14 derart ausgebildet, dass die Temperatur einer zweiten Bauteilstelle 10 der ersten Bauteilschicht 9 durch die erste Temperierungsmaßnahme nicht oder nur marginal beeinflusst wird.

An einer Arbeitsraumwand 16 ist eine Atmosphärensteuerungsvorrichtung 12 zum Beaufschlagen des Arbeitsraums 5 mit einem Schutzgas oder einem Aktivgas sowie zum Evakuieren des Arbeitsraums 5 angeordnet. Ferner ist an den Arbeitsraumwänden 16 eine zweite Temperierungsvorrichtung 15 angeordnet, welche zum Erwärmen oder Kühlen der Arbeitsraumwände 16 bzw. des Arbeitsraums 5, insbesondere im Rahmen der zweiten Temperierungsmaßnahme, ausgebildet ist. An der Arbeitsraumdecke 17 ist eine, insbesondere optische, Temperaturerfassungsvorrichtung 11 zum Erfassen von Temperaturen bzw. Temperaturgradienten der ersten Bauteilschicht 9 angeordnet. An einer Arbeitsraumwand 16 ist eine weitere Temperaturerfassungsvorrichtung 11 zum Erfassen einer Temperatur der Arbeitsraumwand 16 und/oder eines Gases im Arbeitsraum 5 angeordnet. Mittels der Temperaturerfassungsvorrichtung 11 ist eine Steuerung der Aufschmelzvorrichtung 7, der ersten Temperierungsvorrichtung 14 und der zweiten Temperierungsvorrichtung 15 verbesserbar.

In Fig. 2 ist ein erster Verfahrensschritt einer bevorzugten Ausführungsform des erfindungsgemäßen Verfahrens schematisch in einer Seitenansicht dargestellt. In dem ersten Verfahrensschritt wird eine Materialschicht 3 aus granulat- bzw. pulverförmigem Bauteilmaterial 4 mittels der Schichtauftragungsvorrichtung 6 der Vorrichtung 13 auf dem Arbeitsraumboden 2 im Arbeitsraum 5 angeordnet.

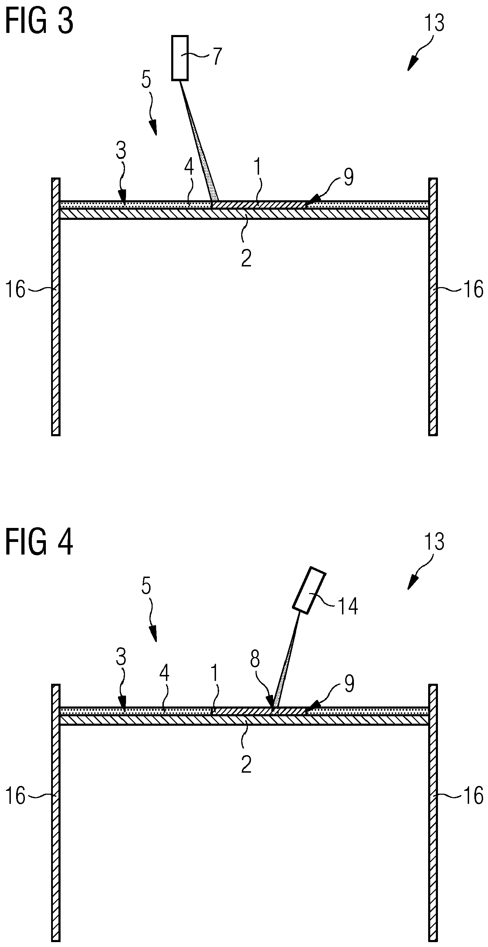

In Fig. 3 ist ein zweiter Verfahrensschritt einer bevorzugten Ausführungsform des erfindungsgemäßen Verfahrens schematisch in einer Seitenansicht dargestellt. In dem zweiten Verfahrensschritt wird ein Teil des Bauteilmaterials 4 der Materialschicht 3 mittels der Aufschmelzvorrichtung 7 gezielt aufgeschmolzen. Das aufgeschmolzene Bauteilmaterial 4 kühlt anschließend wieder ab und verfestigt sich zu einem Komplex. Auf diese Weise wird die erste Bauteilschicht 9 des Bauteils 1 generiert.

In Fig. 4 ist ein dritter Verfahrensschritt einer bevorzugten Ausführungsform des erfindungsgemäßen Verfahrens schematisch in einer Seitenansicht dargestellt. In dem dritten Verfahrensschritt wird die erste Temperierungsmaßnahme mittels der ersten Temperierungsvorrichtung 14 durchgeführt. Hierbei wird beispielsweise mittels der ersten Temperierungsvorrichtung 14 Wärme in eine erste Bauteilstelle 8 der ersten Bauteilschicht 9 des Bauteils 1 eingebracht, um beispielsweise die Temperatur der ersten Bauteilstelle 8 zu erhöhen, zu halten oder ein Abkühlen zu verlangsamen. Der dritte Verfahrensschritt kann auch schon während des zweiten Verfahrensschritts erfolgen. Im Anschluss an den dritten Verfahrensschritt wird der Arbeitsraumboden 2 vorzugsweise um eine Schichtdicke der ersten Bauteilschicht 9 in Bewegungsrichtung B nach unten bewegt, sodass im Anschluss die vorangegangenen Verfahrensschritte wiederholt werden können. Auf diese Weise ist das Bauteil 1 schichtweise herstellbar.

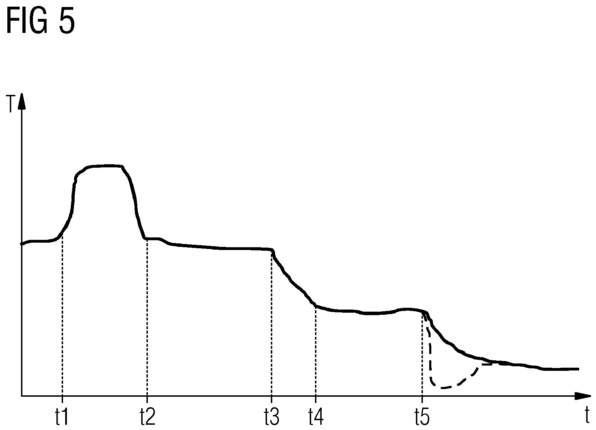

Fig. 5 zeigt einen exemplarischen Temperaturverlauf einer ersten Bauteilstelle 8 bei der Ausführung des erfindungsgemäßen Verfahrens in einem Diagramm. Ab dem ersten Zeitpunkt t1 beginnt der Aufschmelzvorgang an der ersten Bauteilstelle 8, bei dem das Bauteilmaterial 4 aufgeschmolzen bzw. gesintert wird. Zum zweiten Zeitpunkt t2 ist der Aufschmelzvorgang abgeschlossen, und die erste Temperierungsmaßnahme wird durchgeführt. In diesem Beispiel wird die Temperatur der ersten Bauteilstelle 8 durch die erste Temperierungsmaßnahme bis zum dritten Zeitpunkt t3 konstant gehalten, sodass beispielsweise ein Kristallwachstum verbessert ist. Ab dem dritten Zeitpunkt t3 ist die erste Temperierungsmaßnahme beendet, sodass die Temperatur der ersten Bauteilstelle 8 bis zum vierten Zeitpunkt t4 wieder stärker abfällt. Zwischen dem vierten Zeitpunkt t4 und dem fünften Zeitpunkt t5 wird erneut eine erste Temperierungsmaßnahme und/oder eine zweite Temperierungsmaßnahme durchgeführt, um die Temperatur der ersten Bauteilstelle 8 konstant zu halten. Ab dem fünften Zeitpunkt t5 kühlt sich das Bauteil 1 ohne weitere gezielte Temperatureinwirkungen auf die Umgebungstemperatur ab.

Eine ab dem fünften Zeitpunkt t5 dargestellte gestrichelte Linie zeigt eine optionale erste Temperierungsmaßnahme bei welcher die erste Bauteilstelle 8 gezielt gekühlt wird, wie z.B. bei einem Abschreckvorgang. Anschließend erwärmt sich das Bauteil 1 ohne weitere gezielte Temperatureinwirkungen auf die Umgebungstemperatur.

## Patentansprüche

1. Verfahren zur additiven Herstellung eines Bauteils (1) auf einem Arbeitsraumboden (2), aufweisend die folgenden sich abwechselnden Verfahrensschritte zum schichtweisen Erzeugen des Bauteils (1):
- Bereitstellen einer Materialschicht (3) aus mindestens einem Bauteilmaterial (4) in einem sich oberhalb des Arbeitsraumbodens (2) erstreckenden Arbeitsraum (5) mittels einer Schichtauftragsvorrichtung (6), und
- gezieltes Aufschmelzen der bereitgestellten Materialschicht (3) mittels einer Aufschmelzvorrichtung (7) zum Generieren einer Bauteilschicht des Bauteils (1)im Arbeitsraum (5),
**dadurch gekennzeichnet,**
**dass** zusätzlich zum gezielten Aufschmelzen mindestens eine erste Temperierungsmaßnahme im Arbeitsraum (5) derart durchgeführt wird, dass ein Temperaturgradient mindestens einer ersten Bauteilstelle (8) des Bauteils (1) in mindestens einer ersten Bauteilschicht (9) des Bauteils (1) gezielt beeinflusst wird.

2. Verfahren nach Anspruch 1,
**dadurch gekennzeichnet,**
**dass** als mindestens eine erste Temperierungsmaßnahme ein gezieltes lokales Wärmeeinbringen oder ein gezieltes lokales Wärmeabführen an der mindestens einen ersten Bauteilstelle (8) durchgeführt wird.

3. Verfahren nach Anspruch 1 oder 2,
**dadurch gekennzeichnet,**
**dass** die mindestens eine erste Temperierungsmaßnahme derart durchgeführt wird, dass ein Temperaturgradient mindestens einer zweiten Bauteilstelle (10) einer Bauteilschicht anders als der Temperaturgradient der mindestens einen ersten Bauteilstelle (8) beeinflusst wird.

4. Verfahren nach einem der vorangehenden Ansprüche,
**dadurch gekennzeichnet,**
**dass** mindestens eine zweite Temperierungsmaßnahme im Arbeitsraum (5) derart durchgeführt wird, dass der Arbeitsraum (5) gleichmäßig oder im Wesentlichen gleichmäßig temperiert wird.

5. Verfahren nach einem der vorangehenden Ansprüche,
**dadurch gekennzeichnet,**
**dass** mittels einer Temperaturerfassungsvorrichtung (11) die Temperatur und/oder der Temperaturgradient der mindestens einen ersten Bauteilstelle (8) ermittelt wird, wobei die mindestens eine erste Temperierungsmaßnahme in Abhängigkeit der ermittelten Temperatur und/oder des ermittelten Temperaturgradienten der mindestens einen ersten Bauteilstelle (8) gesteuert wird.

6. Verfahren nach Anspruch 5,
**dadurch gekennzeichnet,**
**dass** mittels der Temperaturerfassungsvorrichtung (11) eine Temperaturverteilung der mindestens einen ersten Bauteilschicht (9) ermittelt wird.

7. Verfahren nach Anspruch 4 und 6,
**dadurch gekennzeichnet,**
**dass** die mindestens eine zweite Temperierungsmaßnahme in Abhängigkeit des ermittelten Temperaturgradienten der mindestens einen ersten Bauteilstelle (8) gesteuert wird.

8. Verfahren nach einem der vorangehenden Ansprüche,
**dadurch gekennzeichnet,**
**dass** der Arbeitsraum (5) zur Beeinflussung des Generierens mindestens einer Bauteilschicht mittels einer Atmosphärensteuerungsvorrichtung (12) mit einem Schutzgas beaufschlagt und/oder mit einem Aktivgas beaufschlagt und/oder vollständig oder teilweise evakuiert wird.

9. Vorrichtung (13) zur additiven Herstellung eines Bauteils (1), aufweisend einen Arbeitsraum (5), welcher nach unten durch einen Arbeitsraumboden (2) begrenzt ist, eine Schichtauftragsvorrichtung (6) zum Bereitstellen einer Materialschicht (3) aus mindestens einem Bauteilmaterial (4) in dem Arbeitsraum (5) und eine Aufschmelzvorrichtung (7) zum gezielten Aufschmelzen der bereitgestellten Materialschicht (3) zum Generieren einer Bauteilschicht des Bauteils (1) im Arbeitsraum (5),
**dadurch gekennzeichnet,**
**dass** die Vorrichtung (13) zur Ausführung eines Verfahrens nach einem der Ansprüche 1 bis 8 ausgebildet ist.

10. Vorrichtung (13) nach Anspruch 9,
**dadurch gekennzeichnet,**
**dass** die Vorrichtung (13) eine erste Temperierungsvorrichtung (14) aufweist, welche zur Durchführung der mindestens einen ersten Temperierungsmaßnahme ausgebildet ist.

11. Vorrichtung (13) nach Anspruch 9 oder 10,
**dadurch gekennzeichnet,**
**dass** die Vorrichtung (13) mindestens eine zweite Temperierungsvorrichtung (15) aufweist, welche zum Temperieren des Arbeitsraums (5) ausgebildet ist.

12. Vorrichtung (13) nach einem der Ansprüche 9 bis 11,
**dadurch gekennzeichnet,**
**dass** die Vorrichtung (13) mindestens eine Temperaturerfassungsvorrichtung (11) zum Ermitteln der Temperatur und/oder des Temperaturgradienten der mindestens einen ersten Bauteilstelle (8) aufweist.

13. Vorrichtung (13) nach einem der Ansprüche 9 bis 12,
**dadurch gekennzeichnet,**
**dass** die Vorrichtung (13) mindestens eine Atmosphärensteuerungsvorrichtung (12) aufweist, welche zum Beaufschlagen des Arbeitsraums (5) mit einem Schutzgas und/oder mit einem Aktivgas und/oder zum vollständigen oder teilweisen Evakuieren des Arbeitsraums (5) ausgebildet ist.
